# EUROPEAN PATENT APPLICATION

(11) **EP 4 467 962 A1**
(43) Date of publication of application: **27.11.2024**
(21) Application number: 23779198.3
(22) Date of filing: 02.03.2023
(51) Int. Cl.: G01N 15/02, G01N 21/64

(54) **PARTICLE ANALYZING DEVICE, PARTICLE ANALYSIS METHOD, AND PARTICLE ANALYSIS PROGRAM**

(30) Priority: 31.03.2022 JP 2022058172
(71) Applicant: HORIBA, Ltd., Kyoto-shi Kyoto 601-8510 (JP)
(72) Inventor: TATEWAKI, Yasuhiro, Kyoto-shi, Kyoto 601-8510 (JP)
(74) Representative: Isarpatent
(86) International application number: PCT/JP2023/007791
(87) International publication number: WO 2023/189169

(57) **Abstract**

In analysis of a particle by a PTA method, in order to enable each particle to be analyzed for each type while suppressing increase in size and cost of a device even in a case where excitation wavelengths of fluorescent markers or particles having property of autofluorescence overlap each other, a light irradiation unit (2) that irradiates a sample emitting fluorescence of a plurality of colors with excitation light, one or a plurality of filters (5) that transmits the fluorescence of the plurality of colors while cutting off excitation light, an imaging unit (3) having color identification ability to image fluorescence passing through the filter (5), and an analysis unit (43) that obtains a diffusion rate due to Brownian motion of a particle included in a sample from image data of fluorescence obtained by the imaging unit (3) and analyzes physical property of the particle are included.

## Description

### Technical Field

The present invention relates to a particle analyzing device, a particle analysis method, and a particle analysis program.

### Background Art

As a conventional particle analyzing device, there is a particle analyzing device using a measurement method called a particle tracking analysis method (PTA method).

Specifically, in this measurement method, particles in a cell are imaged with a CCD camera or the like, and a diffusion rate due to Brownian motion of the particles is calculated based on imaging data obtained by the imaging, so that physical properties such as particle diameter distribution are analyzed.

In this type of particle analyzing device, Patent Literature 1 discloses a particle analyzing device configured to irradiate a sample to which a plurality of types of fluorescent markers are added with excitation light having an excitation wavelength corresponding to each of the fluorescent markers.

An object of the particle analyzing device is to allow each particle added with each fluorescent marker to be analyzed for each type by providing a filter that transmits fluorescence while cutting off excitation light in front of a CCD camera so that each piece of fluorescence can be observed for each color.

There are limited options of fluorescent markers that can be added depending on particles to be analyzed, and excitation wavelengths of different types of fluorescent markers may overlap when a plurality of types of particles are analyzed by, for example, multiple staining.

Then, when a sample is irradiated with excitation light having the excitation wavelength, each of different fluorescent markers added to different types of particles emits fluorescence.

As a result, each piece of fluorescence from different fluorescent markers appears in a black-and-white image of a CCD camera, and it is not possible to determine which fluorescent marker each piece of fluorescence is caused by, and there arises a problem that particles cannot be analyzed for each type after all.

Nevertheless, as a method of analyzing different types of particles for each type, there is also a method of preparing a plurality of filters that allow fluorescence wavelengths from different fluorescent markers to pass through and performing measurement while changing these filters in accordance with excitation wavelengths.

According to this method, even if excitation wavelengths of different types of fluorescent markers overlap each other, when fluorescent wavelengths are sufficiently separated from each other, the fluorescent markers can be distinguished by allowing each fluorescent wavelength to pass through a corresponding filter.

However, in this method, it is necessary to prepare filters corresponding to fluorescent markers as many as types of the fluorescent markers, and then change the filters in synchronization with a frame rate of a camera, and optical design also becomes complicated.

Further, although a problem in a case where excitation wavelengths of different types of fluorescent markers overlap is described above, even in a case where excitation wavelengths do not overlap, there are problems such as those below.

For example, a case of using two laser light sources that emit laser light having mutually different excitation wavelengths will be considered.

In this case, as fluorescent markers to be added to a sample, a fluorescent marker A excited by laser light from a first laser light source and a fluorescent marker B excited by laser light from a second laser light source can be used. Then, there are four types of particles that can be analyzed for each type, which are "a particle to which only the fluorescent marker A is added", "a particle to which only the fluorescent marker B is added", "a particle to which both the fluorescent markers A and B are added", and "a particle to which neither the fluorescent marker A nor B is added".

That is, the number of types of particles that can be analyzed is limited according to the number of excitation light sources, and it is necessary to use as many laser light sources as possible in order to analyze more types of particles, leading to increase in size and cost of the device.

Note that the above-described problem is not limited to a case where a fluorescent marker is added to a particle and analysis is performed, and may also occur in common in a case where a particle having autofluorescence property is analyzed.

### Citation List

### Patent Literature

Patent Literature 1: JP 2020-204604 A

### Summary of Invention

### Technical Problem

In view of the above, the present invention solves the above-described problems at once, and it is an object of the present invention to enable analysis of each particle for each type of particles while suppressing increase in size and cost of a device even in a case where excitation wavelengths of fluorescent markers or particles having autofluorescence property overlap in analysis of particles by a PTA method.

### Solution to Problem

That is, a particle analyzing device according to the present invention includes a light irradiation unit that irradiates a sample emitting fluorescence of a plurality of colors with excitation light, one or a plurality of filters that transmits the fluorescence of the plurality of colors while cutting off the excitation light, an imaging unit having color identification ability for imaging fluorescence that has passed through the filter, and an analysis unit that obtains a diffusion rate due to Brownian motion of a particle included in the sample from image data of fluorescence obtained by the imaging unit and analyzes physical property of the particle.

In the particle analyzing device configured as described above, one or a plurality of filters that transmit fluorescence of a plurality of colors while cutting off excitation light, and an imaging unit having color identification ability for imaging fluorescence that has passed through the filter are used. Therefore, even if excitation wavelengths of fluorescence of a plurality of colors overlap each other, each color can be identified, and each particle can be analyzed for each type while increase in size and cost of the device are suppressed.

Here, as a method of analyzing different particles for each type even in a case where excitation wavelengths of fluorescent markers or particles having autofluorescence property overlap each other, for example, a method of separating particles for each type in advance by centrifugation or the like can be exemplified.

However, in this method, pretreatment is required, which takes time and effort, and there is a possibility that property as a sample changes during the treatment process.

On the other hand, in the case of the particle analyzing device according to the present invention described above, even if excitation wavelengths of fluorescence of a plurality of colors overlap each other, it is possible to identify each color, and thus, it is possible to analyze each particle for each type without performing pretreatment for separating particles for each type.

If a filter that transmits fluorescence of a plurality of colors while cutting off excitation light is realized by one filter, there is a concern that manufacturing cost of the filter becomes high, and the device may become expensive.

In view of the above, in order to reduce cost of the device to a low level, it is preferable to transmit the fluorescence of a plurality of colors while cutting off the excitation light by a plurality of the filters.

As described above, in the particle analyzing device according to the present invention, since the imaging unit performs imaging in a manner that a color of fluorescence can be distinguished, it is not necessary to obtain wavelength selectivity of fluorescence to be transmitted for the filter.

Nevertheless, when a wavelength region of fluorescence transmitted through the filter is narrow, it is necessary to replace the filter with a filter that transmits fluorescence according to a fluorescence wavelength of the fluorescence.

In view of the above, the light irradiation unit preferably irradiates the sample with excitation light having excitation wavelengths different from each other, and the one or plurality of filters are preferably configured such that a wavelength region to be transmitted is wider than a wavelength region of to be cut off, in a region of a wavelength longer than a shortest one of the excitation wavelengths.

With such a configuration, since fluorescence of various colors passes through one or a plurality of filters, the same filter can be used for fluorescence of various colors, and the number of components can be reduced and low cost can be achieved.

As the imaging unit having color identification ability, for example, a configuration in which a plurality of combinations of a filter that transmits fluorescence of a certain color and a CCD camera are provided is conceivable, but in order to further simplify optical design, the imaging unit preferably includes a color CCD.

The light irradiation unit preferably sequentially changes the excitation light having an excitation wavelength for generating fluorescence of a plurality of the colors and irradiates the sample with the excitation light.

This makes it possible to accurately analyze each particle to which a fluorescent marker is added for each type.

A particle identification unit that identifies a particle emitting fluorescence from the image data of fluorescence obtained by the imaging unit, and a fluorescence identification unit that identifies fluorescence information related to fluorescence emitted by a particle identified by the particle identification unit are preferably included, and the analysis unit preferably analyzes physical property of a particle for each piece of the fluorescence information identified by the fluorescence identification unit.

This makes it possible to analyze physical property for each fluorescence information, that is, for each type of particles.

As a specific embodiment of the fluorescence identification unit, one that identifies hue obtained by converting an output value from the imaging unit as the fluorescence information can be exemplified.

A display unit that displays a graph in which one axis is set to the fluorescence information and another axis is set to physical property of a particle, and displays plots indicating particles on the graph is preferably included.

This makes it possible to grasp variation in physical properties such as size of a particle to which a certain fluorescent marker is added at a glance.

A display unit that displays a graph in which one axis is set to the fluorescence information obtained by irradiating the sample with excitation light having a first excitation wavelength and another axis is set to the fluorescence information obtained by irradiating the sample with excitation light having a second excitation wavelength, and displays plots indicating particles on the graph is preferably included.

This makes it possible to display fluorescence information of each of various particles included in a sample with high visibility.

The display unit preferably displays each of the plots in a selectable manner, and in a case where one or a plurality of the plots are selected, displays an analysis result of the analysis unit for particles indicated by the plots.

This makes it possible to easily display an analysis result of a particle to be checked, and improve operability.

In a case where one or a plurality of the plots are selected, the display unit preferably displays an enlarged image obtained by cutting out particles indicated by the plots from the image data.

In this case, by checking the enlarged image, it is possible to check whether or not size of a particle appearing in the enlarged image, a color of the fluorescence, and the like are within an assumed range, for example.

As a specific embodiment of the fluorescence identification unit, an aspect in which an average of color information of a plurality of pixels representing one particle included in the image data is calculated as the fluorescence information of a fluorescent marker added to the particle.

In the above-described embodiment, there is a case where a central portion of pixels representing one particle included in image data is overexposed, such as a case where fluorescence imaged by the imaging unit 3 is bright.

Therefore, in order to enable acquisition of more accurate fluorescence information, color information to be averaged is preferably that of pixels excluding at least a pixel located in a central portion among a plurality of pixels representing the one particle.

A plurality of types of fluorescent markers are preferably added to at least one type of particles included in the sample.

In this way, the particle analyzing device according to the present invention contributes to a multiple staining method.

Further, a particle analysis method according to the present invention includes irradiating a sample emitting fluorescence of a plurality of colors with excitation light, transmitting fluorescence of a plurality of the colors while cutting off the excitation light by using one or a plurality of filters, imaging fluorescence that has passed through the filter by an imaging unit having color identification ability, and obtaining a diffusion rate due to Brownian motion of a particle included in the sample from image data of fluorescence obtained by the imaging unit, and analyzing physical property of the particle.

Furthermore, a particle analysis program according to the present invention is a program used in a particle analyzing device including a light irradiation unit that irradiates a sample emitting fluorescence of a plurality of colors with excitation light, one or a plurality of filters that transmits the fluorescence of the plurality of colors while cutting off the excitation light, and an imaging unit having color identification ability for imaging fluorescence that has passed through the filter. The particle analysis program causes a computer to perform a function as an analysis unit that obtains a diffusion rate due to Brownian motion of a particle included in the sample from image data of fluorescence obtained by the imaging unit and analyzes physical property of the particle.

According to the particle analysis method and particle analysis program described above, the same effect as that of the particle analyzing device described above can be obtained.

### Advantageous Effects of Invention

According to the present invention described above, in analysis of a particle by a PTA method, it is possible to analyze each of particles for each type without requiring pretreatment for separating the particles for each type and while suppressing increase in size and cost of the device.

### Brief Description of Drawings

FIG. 1 is a schematic diagram illustrating a particle analyzing device according to an embodiment of the present invention.
FIG. 2 is a table showing an example of a fluorescent marker used in the embodiment.
FIG. 3 is a graph showing transmittance of a filter group in the embodiment.
FIG. 4 is a functional block diagram illustrating a function of an information processing device according to the embodiment.
FIG. 5 is a schematic diagram for explaining a particle to which the fluorescent marker of the embodiment is added.
FIG. 6 is a schematic diagram for explaining a particle to which the fluorescent marker of the embodiment is added.
FIG. 7 is a schematic diagram illustrating an example of content displayed by a display unit of the embodiment.
FIG. 8 is a schematic diagram illustrating an example of content displayed by the display unit of the embodiment.
FIG. 9 is a table illustrating an example of information stored in an analysis information storage unit according to another embodiment.

### Description of Embodiments

Hereinafter, an embodiment of a particle analyzing device according to the present invention will be described with reference to the drawings.

### <Device configuration>

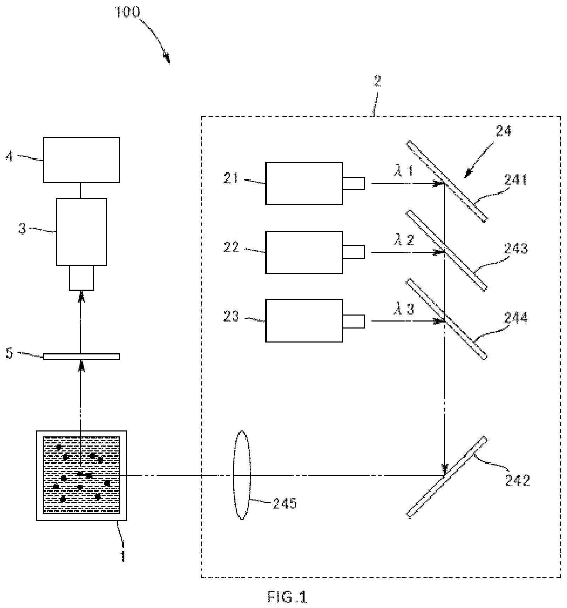

As illustrated in FIG. 1, a particle analyzing device 100 of the present embodiment analyzes physical property of a particle contained in a sample in a cell 1, and for example, analyzes an exosome contained in a body fluid sample such as blood or urine, or a virus-like particle related to a vaccine, a liposome, protein, or the like.

The particle analyzing device 100 irradiates a sample obtained by adding a plurality of types of fluorescent markers to a particle with light, detects fluorescence from the particle to which the fluorescent markers are added, and analyzes physical property of the particle, and is used together with a multiple staining method.

However, in analysis using the present particle analyzing device 100, it is not always necessary to use a fluorescent marker in a case where a particle itself emits fluorescence, for example, a case where a particle contained in a sample has property of autofluorescence. Examples of such a particle include inorganic materials such as a fluorescent bead.

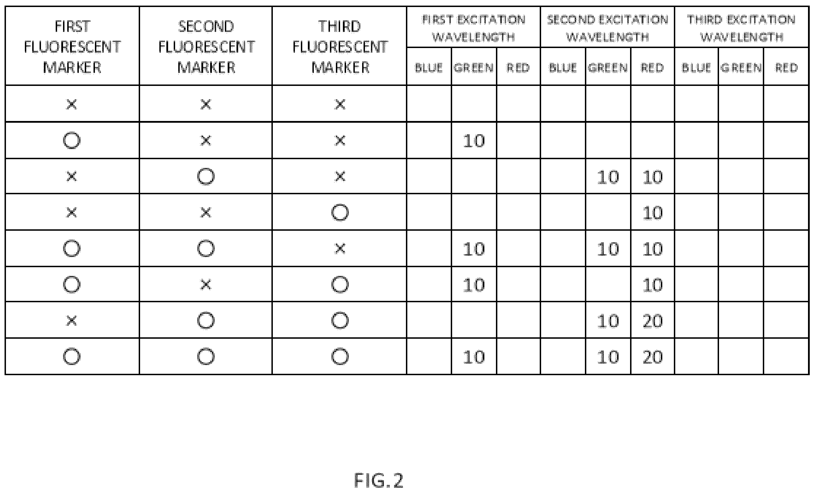

In the present embodiment, as illustrated in FIG. 2, three types of fluorescent markers are used. Specifically, a case where different types of fluorescent markers having overlapping excitation wavelengths are used, such as a second fluorescent marker and a third fluorescent marker in FIG. 2, is assumed. However, even in a case where excitation wavelengths of fluorescent markers to be used do not overlap each other, it goes without saying that analysis by the present particle analyzing device 100 is possible.

Note that, in FIG. 2, for convenience of explanation, a state in which a fluorescent marker emits fluorescence is represented as "10", and in a case where both the second fluorescent marker and the third fluorescent marker are added, a state in which fluorescence (red fluorescence in FIG. 2) emitted from the fluorescent markers is added is represented as "20".

In addition to the above, fluorescence emitted by the second fluorescent marker is yellow in which green and red are added, fluorescence emitted by the third fluorescent marker is red, and when both the second fluorescent marker and the third fluorescent marker are added, a particle emits orange fluorescence in which yellow and red are mixed.

Specifically, as illustrated in FIG. 1, the particle analyzing device 100 includes a light irradiation unit 2 that emits excitation light for exciting each of a plurality of types of fluorescent markers, an imaging unit 3 that images a particle by detecting fluorescence from each of a plurality of types of fluorescent markers, and an information processing device 4 that analyzes physical property of a particle by using imaging data obtained by the imaging unit 3.

The light irradiation unit 2 includes a plurality of light sources 21, 22, and 23 that emit light having an excitation wavelength that excites a plurality of types of fluorescent markers. The light sources 21, 22, and 23 are, for example, laser light sources. In the present embodiment, since three types of fluorescent markers are used, three of the light sources 21, 22, and 23 are provided. Note that one light source may emit light including three excitation wavelengths. Further, the number of light sources may be appropriately changed according to the number of types of fluorescent markers used.

The first light source 21 emits excitation light (for example, blue light) having an excitation wavelength λ1 of a first fluorescent marker, the second light source 22 emits excitation light (for example, green light) having an excitation wavelength λ2 of the second fluorescent marker, and the third light source 23 emits excitation light (for example, red light) having an excitation wavelength λ3 of the third fluorescent marker. Here, the excitation wavelengths λ1, λ2, and λ3 are different from fluorescence wavelengths λ1', λ2', and λ3 'of fluorescence emitted by three types of fluorescent markers. Further, light emitted from each of the light sources 21, 22, and 23 is guided to the cell 1 via an irradiation optical system 24 such as reflection mirrors 241 and 242, half mirrors 243 and 244, and a condenser lens 245.

These light sources 21, 22, and 23 are controlled by a control unit (not illustrated) to sequentially emit light having the excitation wavelengths λ1, λ2, and λ3 corresponding to fluorescent markers. Note that the light sources 21, 22, and 23 can be controlled to simultaneously emit light.

The imaging unit 3 images a particle to which a fluorescent marker is added by detecting fluorescence emitted from the fluorescent marker, and outputs, for example, image data as imaging data. The imaging unit 3 has color identification ability, and is an imaging camera having a color CCD in the present embodiment. Note that, in FIG. 1, a light irradiation direction of the light irradiation unit 2 and an imaging direction of the imaging unit 3 are provided orthogonal to each other, but the present invention is not limited to this.

Here, when a particle in the cell 1 is irradiated with excitation light, the excitation light is scattered by the particle, and when the scattered light is detected by the imaging unit 3, detection of fluorescence described above is inhibited.

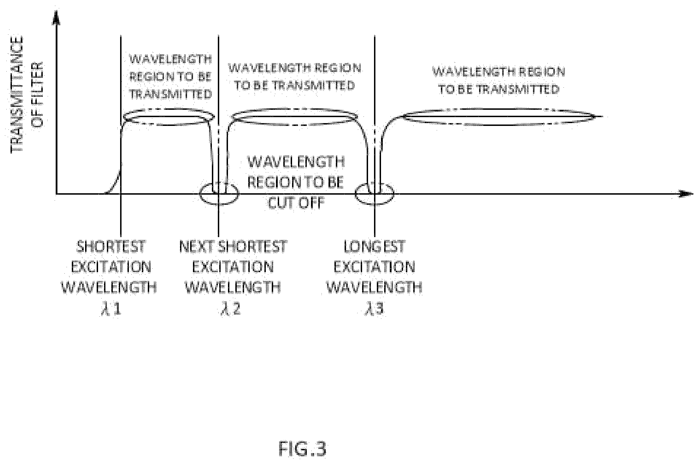

In view of the above, in order to prevent scattered light of excitation light from being detected by the imaging unit 3, the particle analyzing device 100 includes one or a plurality of filters 5 that transmits fluorescence of a plurality of colors emitted from a plurality of types of the fluorescent markers described above while cutting off excitation light from each of the light sources 21, 22, and 23 as illustrated in FIGS. 1 and 3.

In the present embodiment, a filter group 5 (hereinafter, referred to as a band stop filter 5) formed by overlapping a plurality of filters is provided between the cell 1 and the imaging unit 3. By the above, the imaging unit 3 detects fluorescence that passes through the band stop filter 5 in a state where excitation light is not detected.

As illustrated in FIG. 3, the band stop filter 5 is configured such that a wavelength region to be transmitted is wider than a wavelength region to be cut off, in a region of a wavelength longer than the shortest excitation wavelength λ1 of excitation light from a plurality of the light sources 21, 22, and 23. Note that, here, all light in a wavelength region shorter than the shortest excitation wavelength λ1 in excitation light is cut off, but transmittance in this short wavelength region may be appropriately changed.

Specifically, the band stop filter 5 is formed by placing at least a plurality of notch filters on each other, and is formed by placing a first filter that transmits a region of a wavelength longer than shortest excitation wavelength λ1, a second filter that cuts off the next shortest excitation wavelength λ2, and a third filter that cuts off the longest excitation wavelength λ3 on each other.

By the above, as illustrated in FIG. 3, the band stop filter 5 transmits fluorescence of various wavelengths (various colors) while cutting off at least the excitation wavelengths λ1, λ2, and λ3.

The information processing device 4 is a computer including a CPU, a memory, a display, various input and output devices, and the like, and is connected to the imaging unit 3 in a wired or wireless manner.

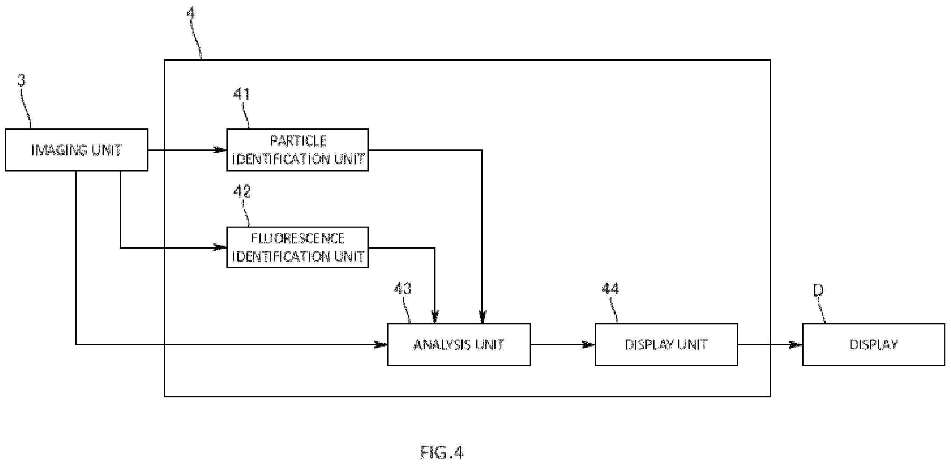

The information processing device 4 has functions as a particle identification unit 41, a fluorescence identification unit 42, an analysis unit 43, and a display unit 44 as illustrated in FIG. 4 as a particle analysis program stored in the memory is executed.

Hereinafter, a function of each unit of the information processing device 4 will be described together with description of operation of the particle analyzing device 100 of the present embodiment.

First, by adding a plurality of types of fluorescent markers to a sample in the cell 1, multiple staining of a particle to be measured included in the sample is performed. Note that a step of stirring the sample may be provided before adding a fluorescent marker.

Next, the light irradiation unit 2 irradiates a sample in the cell 1 with excitation light having the excitation wavelengths λ1, λ2, and λ3 corresponding to a plurality of types of fluorescent markers, and the imaging unit 3 images fluorescence generated by the irradiation.

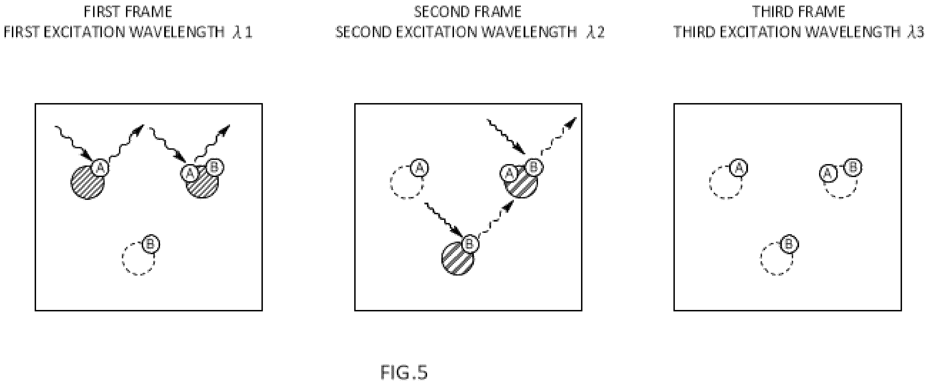

In the present embodiment, as described above, excitation light having the excitation wavelengths λ1, λ2, and λ3 is emitted sequentially. Then, by appropriately setting a switching timing of the excitation light and a frame length of the imaging unit 3, here, as illustrated in FIG. 5, among pieces of image data obtained by the imaging unit 3, a first frame is obtained by irradiation with excitation light having the first excitation wavelength λ1, a second frame is obtained by irradiation with excitation light having the second excitation wavelength λ2, and a third frame is obtained by irradiation with excitation light having the third excitation wavelength λ3.

In other words, a (3 × (N - 1) + 1)-th frame is obtained by irradiation with excitation light having the first excitation wavelength λ1, a (3 × (N - 1) + 2)-th frame is obtained by irradiation with excitation light having the second excitation wavelength λ2, and a (3 × (N - 1) + 3)-th frame is obtained by irradiation with excitation light having the third excitation wavelength λ3. Note that N is a natural number.

However, a switching timing of excitation light and a length of a frame of the imaging unit 3 are not limited to those in the above-described aspect, and for example, image data of a first group including a plurality of frames may be obtained by irradiation with excitation light having the first excitation wavelength λ1, image data of a second group including a plurality of subsequent frames may be obtained by irradiation with excitation light having the second excitation wavelength λ2, and image data of a third group including a plurality of subsequent frames may be obtained by irradiation with excitation light having the third excitation wavelength λ3.

Hereinafter, for convenience of description, as illustrated in FIG. 5, a state in which a particle to which only the first fluorescent marker A is added, a particle to which only the second fluorescent marker B is added, and a particle to which the first fluorescent marker A and the second fluorescent marker B are added may appear in image data of three consecutive frames is taken.

Note that, in FIG. 5, it is described as if a particle is stationary between frames, but actually, time for irradiating with each of excitation light having the first excitation wavelength λ1, excitation light having the second excitation wavelength λ2, and excitation light having the third excitation wavelength λ3 is time for the imaging unit 3 to acquire image data of one frame, and is very short time. Therefore, movement of a particle during this period is also slight.

Further, in FIG. 5, the first fluorescent marker A emits fluorescence by being irradiated with excitation light having the first excitation wavelength, and the second fluorescent marker B emits fluorescence by being irradiated with excitation light having the second excitation wavelength.

As described above, when a sample is sequentially irradiated with excitation light having the excitation wavelengths λ1, λ2, and λ3, the particle identification unit 41 identifies a particle emitting fluorescence, in other words, a particle to which a fluorescent marker is added, from image data of fluorescence obtained by the imaging unit 3.

The particle identification unit 41 uses image data of a plurality of frames to identify a position, size, or a range of a particle appearing in the image data. Specifically, the particle identification unit 41 performs image processing on image data to identify a position and the like of a particle by distinguishing between a particle to which a fluorescent marker emitting fluorescence is added and a region other than that.

In FIG. 5, the particle identification unit 41 identifies a particle to which the first fluorescent marker A is added from image data of a first frame, and identifies a particle to which the second fluorescent marker B is added from image data of a second frame. On the other hand, in image data of a third frame, a fluorescent marker emitting fluorescence is not imaged, and there is no particle identified by the particle identification unit 41.

Here, at first glance, by comparing image data of three frames illustrated in FIG. 5, it is considered that each of the particle to which only the first fluorescent marker A is added, the particle to which only the second fluorescent marker B is added, and the particle to which the first fluorescent marker A and the second fluorescent marker B are added can be classified.

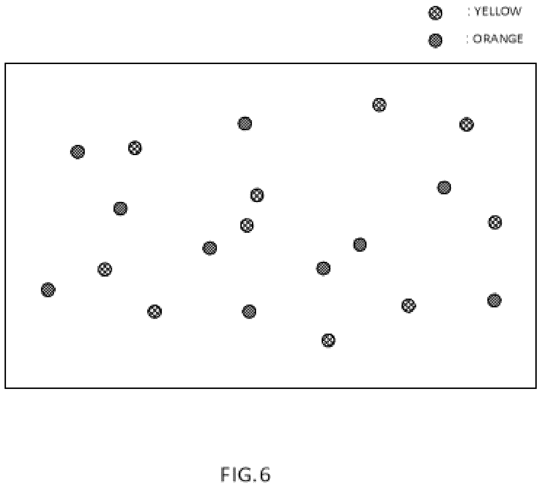

However, depending on types of the first fluorescent marker A and the second fluorescent marker B, a light emission state illustrated in FIG. 5 is not necessarily obtained. For example, in a case where an excitation wavelength of the fluorescent marker A and an excitation wavelength of the fluorescent marker B overlap each other, there may be a light emission state in which fluorescence from different fluorescent markers appears in the same frame as illustrated in FIG. 6. In this case, if the image data is monochrome, each particle cannot be classified.

In view of the above, the fluorescence identification unit 42 uses color identification ability of the imaging unit 3 described above to identify fluorescence information that is information related to fluorescence of a fluorescent marker added to a particle identified by the particle identification unit 41. Note that the fluorescence information may be color information related to a color of fluorescence, information (for example, a type of fluorescent marker) identified based on the color information, or the like. Further, in order to obtain information on an amount of a fluorescent marker added to a particle, the fluorescence information may include intensity of fluorescence.

The fluorescence identification unit 42 of the present embodiment acquires an output value from a color CCD of the imaging unit 3, quantifies a color (hue) of fluorescence appearing in image data based on a predetermined calculation formula or the like by using, for example, RGB or HSV, and obtains a numerical value obtained by the quantification as fluorescence information of a fluorescent marker. Note that, as quantified hue, for example, a hue angle represented by a color space or the like can be exemplified. Further, the fluorescence information may include a value obtained by quantifying brightness or saturation of fluorescence.

Focusing on one of particles identified by the particle identification unit 41, the fluorescence identification unit 42 sets an average of color information of a plurality of pixels representing the one particle included in image data, as fluorescence information of a fluorescent marker added to the particle.

More specifically, the fluorescence identification unit 42 may calculate fluorescence information of one particle by summing up numerical values obtained by quantifying hue of each of a plurality of pixels representing the one particle and dividing the summed value by the number of pixels.

Further, as another aspect, the fluorescence identification unit 42 may sum up output values of a color CCD corresponding to each of a plurality of pixels representing one particle, divide the summed value by the number of pixels to calculate an average value of the output values, and calculate hue quantified by the average value as fluorescence information.

There is a case where a central portion of pixels representing one particle included in image data is overexposed, such as a case where fluorescence imaged by the imaging unit 3 is bright. In this case, when fluorescence information is calculated using color information of a pixel in the central portion, there is a concern about decrease in reliability of the fluorescence information.

In view of the above, in order to make fluorescence information more reliable, the configuration may be such that the fluorescence identification unit 42 acquires fluorescence information by averaging color information of pixels excluding at least a pixel located in a central portion among a plurality of pixels representing one particle.

Here, the information processing device 4 of the present embodiment may further include a marker data storage unit that stores marker data in which hue of fluorescence emitted from a fluorescent marker is associated with a type of the fluorescent marker.

In such a configuration, the fluorescence identification unit 42 may be configured to identify a type of a fluorescent marker added to a particle identified by the particle identification unit 41 as fluorescence information based on hue of fluorescence obtained from image data and marker data stored in the marker data storage unit.

By identification of fluorescence information in this manner, even if excitation wavelengths of different fluorescent markers overlap each other and fluorescence from different fluorescent markers appears in the same frame, it is possible to determine fluorescence information of each piece of fluorescence, that is, hue of fluorescence emitted by each fluorescent marker or a type of each fluorescent marker.

The analysis unit 43 acquires imaging data from the imaging unit 3 and analyzes physical property of a particle based on the imaging data. Specifically, for each piece of fluorescence information identified by the fluorescence identification unit 42, the analysis unit 43 analyzes physical property of a particle to which a fluorescent marker of the fluorescence information is added. That is, the analysis unit 43 analyzes physical property of particles contained in a sample by dividing the physical property for each type of the particles.

Here, the analysis unit 43 calculates particle diameter distribution by the PTA method, and more specifically, calculates particle diameter distribution by calculating a diffusion rate due to Brownian motion of particles based on imaging data. Note that the analysis unit 43 does not necessarily need to calculate particle diameter distribution, and may calculate a particle diameter of a particle as physical property, for example.

The display unit 44 displays an analysis result of the analysis unit 43 on a display D or the like, and specifically displays particle diameter distribution, a particle diameter, or the like of particles in a distinguishable manner for each piece of fluorescence information of a fluorescent marker, for example.

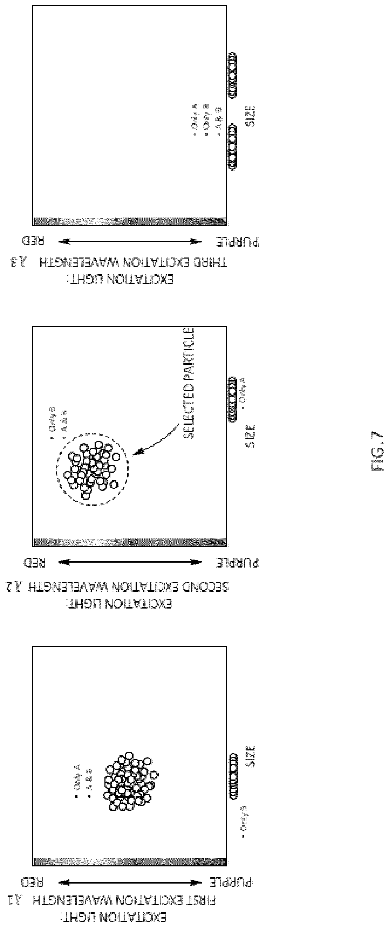

As a specific embodiment of the display unit 44, as illustrated in FIG. 7, there is an aspect in which a graph in which one axis is set to fluorescence information and another axis is set to physical property of a particle is displayed, and plots indicating particles is displayed on the graph.

In this embodiment, one axis represents color information of fluorescence as fluorescence information with color gradation by a color scale, and another axis indicates size (particle diameter) of a particle. Note that another axis may indicate the number of particles.

Here, a plurality of types of fluorescent markers are used, and physical property of a particle can be analyzed for each excitation light having the excitation wavelengths λ1, λ2, and λ3 corresponding to the fluorescent markers. Therefore, the display unit 44 of the present embodiment displays a graph indicating a first analysis result obtained by irradiation with the first excitation wavelength λ1, a graph indicating a second analysis result obtained by irradiation with the second excitation wavelength λ2, and a graph indicating a third analysis result obtained by irradiation with the third excitation wavelength λ3 on the same screen in a comparable manner, for example. Note that the display unit 44 may display graphs indicating analysis results in a switchable manner.

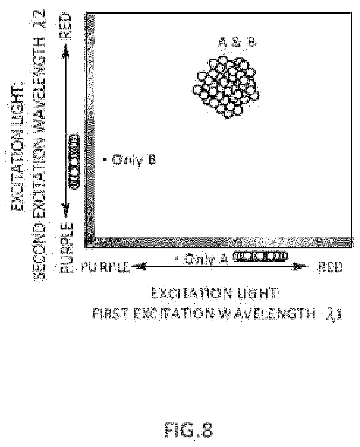

Further, as another embodiment of the display unit 44, as illustrated in FIG. 8, there can be an aspect in which a graph in which one axis is set to fluorescence information obtained by irradiating a sample with excitation light having a certain excitation wavelength and another axis is set to fluorescence information obtained by irradiating the sample with excitation light having another excitation wavelength is displayed, and plots indicating particles is displayed on the graph.

In this embodiment, one axis and another axis represent color information of fluorescence as fluorescence information with color gradation by a color scale.

The display unit 44 displays a graph corresponding to a combination of two types of excitation wavelengths selected from among excitation wavelengths corresponding to fluorescent markers. In the present embodiment, three graphs corresponding to three combinations obtained by combining two types from among three types of the excitation wavelengths λ1, λ2, and λ3 are displayed on the same screen in a comparable manner, for example. Note that the display unit 44 may display graphs indicating analysis results in a switchable manner, or may display plots indicating particles in a three-dimensional graph using three axes. Note that in the graph using three axes, a first axis, a second axis, and a third axis may be appropriately combined from among various parameters such as hue, the number of particles, and a particle diameter.

Furthermore, as illustrated in FIG. 7, for example, the display unit 44 may display each of the above-described plots in a selectable manner.

In this case, when the user selects one or a plurality of plots via an input means such as a mouse or a touch panel, the display unit 44 may be configured to display an analysis result such as particle diameter distribution obtained for particles indicated by plots on the same screen as or a different screen from the graph described above.

Further, in a case where one or a plurality of plots are selected, the display unit 44 may be configured to display an enlarged image obtained by cutting out particles indicated by the selected one or plurality of plots from image data on the same screen as or a different screen from that of the graph described above.

### <Effect of present embodiment>

According to the particle analyzing device 100 of the present embodiment configured as described above, fluorescence of a plurality of colors is transmitted while each piece of excitation light is cut off by use of the band stop filter 5, and the imaging unit 3 having color identification ability for imaging of fluorescence passing through the band stop filter 5 performs imaging. Therefore, even if excitation wavelengths of different fluorescent markers overlap each other, and fluorescence of a plurality of colors appears in the same frame as illustrated in FIG. 6, each color can be identified.

This makes it possible to analyze each particle for each type without requiring pretreatment for separating particles for each type and while preventing increase in size and cost of the device, and contributes particularly to a multiple staining method.

Further, since the band stop filter 5 is formed by placing a plurality of notch filters on each other, manufacturing cost can be reduced to a low level.

Furthermore, since the band stop filter 5 is configured such that a wavelength region to be transmitted is wider than a wavelength region to be cut off in a region of a wavelength longer than the shortest excitation wavelength λ1, fluorescence of various colors can be transmitted. By the above, the same band stop filter 5 can be used for various fluorescent markers, and the number of components can be reduced and reduction in cost can be achieved.

As the imaging unit 3, a configuration in which a plurality of combinations of a filter that transmits fluorescence of a certain color and a CCD camera are provided is conceivable, but the imaging unit 3 of the present embodiment includes a color CCD, and optical design can be made simpler.

Since the light irradiation unit 2 sequentially changes excitation light having excitation wavelengths corresponding to a plurality of types of fluorescent markers in order and irradiates a sample with the excitation light, it is possible to accurately analyze each of particles to which the fluorescent markers are added for each type.

Since the analysis unit 43 analyzes physical property of a particle to which a fluorescent marker identified by the fluorescence identification unit 42 is added for each piece of fluorescence information of the fluorescent marker, physical property of a particle contained in a sample can be analyzed separately for each type of particles.

The display unit 44 displays a graph in which one axis is set to fluorescence information and another axis is set to physical property of a particle, and displays plots indicating particles in the graph, so that it is possible to grasp variation in physical properties such as size of a particle to which a certain fluorescent marker is added at a glance.

Further, the display unit 44 displays a graph in which one axis is set to fluorescence information obtained by irradiation of a sample with excitation light having a certain excitation wavelength and another axis is set to fluorescence information obtained by irradiation of sample with excitation light having another excitation wavelength, and displays plots indicating particles on the graph. Therefore, it is possible to display fluorescence information of each of various particles included in a sample with high visibility.

Furthermore, since the display unit 44 displays each plot in a selectable manner and displays an analysis result of the analysis unit 43 for particles indicated by one or a plurality of plots in a case where the plots are selected, it is possible to easily display an analysis result of a particle to be checked and improve operability.

In addition, in a case where one or a plurality of plots are selected, the display unit 44 displays an enlarged image obtained by cutting out particles indicated by the plots from image data. Therefore, by checking the enlarged image, it is possible to check whether or not size of a particle appearing in the image, a color of fluorescence, and the like are within an assumed range, for example.

### <Other embodiments>

Note that the present invention is not limited to the above-described embodiment.

For example, the imaging unit 3 only needs to have color identification ability, and may be configured to include a plurality of combinations of a filter that transmits fluorescence of a certain color and a CCD camera, for example.

Further, the analysis unit 43 is not limited to one that measures particle diameter distribution or a particle diameter, and may be one that analyzes various characteristics of a particle, for example, number concentration of particles and gel characteristics such as average lattice spacing of gel from an autocorrelation function.

Furthermore, in the above embodiment, a plurality of filters transmits fluorescence of a plurality of colors emitted from a plurality of types of fluorescent markers while cutting off each piece of excitation light. However, one filter may transmit fluorescence of a plurality of colors emitted from a plurality of types of fluorescent markers while cutting off each piece of excitation light.

The display unit 44 does not need to have all of a function of displaying each graph described in the above embodiment, a function of displaying an analysis result for a particle indicated by a selected plot, and a function of displaying an enlarged image of a particle indicated by a selected plot, and which function is to be exhibited may be appropriately changed.

In the above embodiment, the aspect in which fluorescence is detected by the imaging unit 3 while excitation light is cut off is described, but scattered light that hits a particle and scatters may also be detected while fluorescence is detected by the imaging unit 3. Specifically, for example, an aspect of using a fourth light source for irradiating a sample with light having a fourth wavelength λ4 that is transmitted by one or a plurality of filters can be exemplified. Then, the analysis unit 43 may be configured to obtain a diffusion rate due to Brownian motion of a particle included in a sample from image data of scattered light obtained by the imaging unit 3 and analyze physical property of the particle.

This makes it possible to analyze physical property of a particle by using both fluorescence and scattered light, and thus, it is possible to analyze more various physical properties and more various types of particles (for example, a particle to which a fluorescent marker is not added, and the like).

As a specific aspect, among image data obtained by the imaging unit 3 by sequentially irradiating excitation light having the excitation wavelengths λ1, λ2, and λ3 and light having the fourth wavelength λ4, a first frame is obtained by irradiation with the excitation light having the first excitation wavelength λ1, a second frame is obtained by irradiation with the excitation light having the second excitation wavelength λ2, a third frame is obtained by irradiation with the excitation light having the third excitation wavelength λ3, and a fourth frame is obtained by irradiation with the light having the fourth wavelength λ4.

In other words, a (4 × (N - 1) + 1)-th frame can be obtained by irradiating excitation light having the first excitation wavelength λ1, a (4 × (N - 1) + 2)-th frame can be obtained by irradiating excitation light having the second excitation wavelength λ2, a (4 × (N - 1) + 3)-th frame can be obtained by irradiating excitation light having the third excitation wavelength λ3, and a (4 × (N - 1) + 4)-th frame can be obtained by irradiating light having the fourth wavelength λ4. Note that N is a natural number.

Note that, as another aspect of detecting scattered light without using the above-described fourth light source, an aspect of removing the band stop filter 5 from between the cell 1 and the imaging unit 3 in a state where a sample is irradiated with excitation light can be exemplified.

Furthermore, the light irradiation unit 2 includes a plurality of the light sources 21, 22, and 23 in the above embodiment, but as described with reference to FIG. 6, in a case where excitation wavelengths of fluorescence of a plurality of colors overlap, fluorescence of a plurality of colors may be observed using one light source that emits excitation light of a predetermined excitation wavelength.

Further, the information processing device 4 has a function as an analysis information storage unit set in a predetermined region of a memory, and various types of information related to analysis may be stored in the analysis information storage unit.

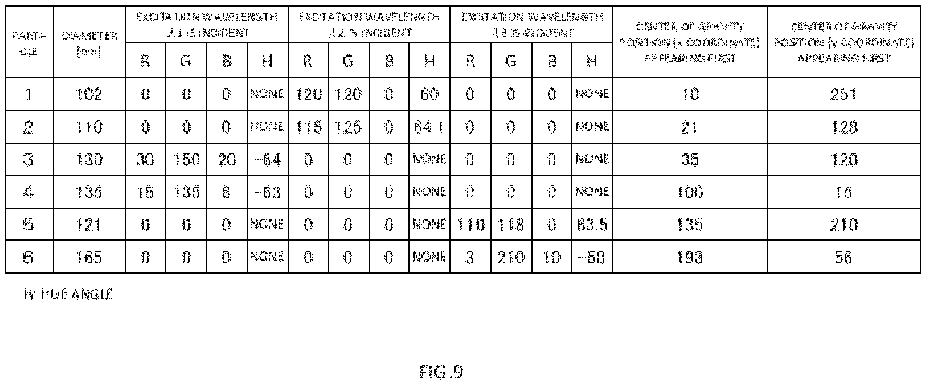

Specifically, information stored in the analysis information storage unit is information on a particle identified by the particle identification unit 41, and as an example of the information, information illustrated in FIG. 9 can be exemplified. That is, in association with an identification number indicating a particle identified by the particle identification unit 41, the analysis information storage unit can include a diameter of the particle, an output value of RGB output from a color CCD when excitation light of each of the excitation wavelengths λ1, λ2, and λ3 is incident, hue information (here, a hue angle) calculated using the output value, an X coordinate and a Y coordinate of a center of gravity position where the particle is first shown in image data, and the like. As a matter of course, it is not necessary to store all of them, and they may be appropriately selected.

Further, the analysis information storage unit may store, for example, first image data in which the particle appear in association with the identification number described above.

Other than the above, the present invention is not limited to the above embodiment, and it goes without saying that various modifications can be made without departing from the gist of the present invention.

### Industrial Applicability

According to the present invention, in analysis of a particle by the PTA method, even in a case where excitation wavelengths of fluorescent markers or particles having autofluorescence property overlap each other, it is possible to analyze each particle for each type while suppressing increase in size and cost of the device. Reference Signs List

- 100: particle analyzing device
- 1: cell
- 2: light irradiation unit

- 3: imaging unit
- 4: information processing device
- 41: particle identification unit
- 42: fluorescence identification unit
- 43: analysis unit
- 44: display unit
- 5: band stop filter

## Claims

1. A particle analyzing device comprising:
a light irradiation unit that irradiates a sample emitting fluorescence of a plurality of colors with excitation light;
one or a plurality of filters that transmits the fluorescence of the plurality of colors while cutting off the excitation light;
an imaging unit having color identification ability for imaging fluorescence that has passed through the filter; and
an analysis unit that obtains a diffusion rate due to Brownian motion of a particle included in the sample from image data of fluorescence obtained by the imaging unit and analyzes physical property of the particle.

2. The particle analyzing device according to claim 1, wherein the fluorescence of the plurality of colors is transmitted while the excitation light is cut off by a plurality of the filters.

3. The particle analyzing device according to claim 1 or 2, wherein
the light irradiation unit irradiates the sample with excitation light having excitation wavelengths different from each other, and
the one or plurality of filters are configured such that
a wavelength region to be transmitted is wider than a wavelength region to be cut off, in a region of a wavelength longer than a shortest one of the excitation wavelengths.

4. The particle analyzing device according to any one of claims 1 to 3, wherein the imaging unit includes a color CCD.

5. The particle analyzing device according to any one of claims 1 to 4, wherein the light irradiation unit sequentially changes the excitation light having an excitation wavelength for generating the fluorescence of the plurality of colors and irradiates the sample with the excitation light.

6. The particle analyzing device according to any one of claims 1 to 5, further comprising:
a particle identification unit that identifies a particle emitting fluorescence from the image data of fluorescence obtained by the imaging unit; and
a fluorescence identification unit that identifies fluorescence information related to fluorescence emitted by a particle identified by the particle identification unit, wherein
the analysis unit analyzes physical property of a particle for each piece of the fluorescence information identified by the fluorescence identification unit.

7. The particle analyzing device according to claim 6, wherein the fluorescence identification unit identifies, as the fluorescence information, hue obtained by converting an output value from the imaging unit.

8. The particle analyzing device according to claim 6 or 7, further comprising a display unit that displays a graph in which one axis is set to the fluorescence information and another axis is set to physical property of a particle, and displays plots indicating particles on the graph.

9. The particle analyzing device according to claim 6 or 7, further comprising a display unit that displays a graph in which one axis is set to the fluorescence information obtained by irradiating the sample with excitation light having a first excitation wavelength and another axis is set to the fluorescence information obtained by irradiating the sample with excitation light having a second excitation wavelength, and displays plots indicating particles on the graph.

10. The particle analyzing device according to claim 8 or 9, wherein the display unit displays each of the plots in a selectable manner, and in a case where one or a plurality of the plots are selected, displays an analysis result of the analysis unit for particles indicated by the plots.

11. The particle analyzing device according to claim 10, wherein, in a case where one or a plurality of the plots are selected, the display unit displays an enlarged image obtained by cutting out particles indicated by the plots from the image data.

12. The particle analyzing device according to any one of claims 6 to 11, wherein the fluorescence identification unit calculates an average of color information of a plurality of pixels representing one particle included in the image data, as fluorescence information of a fluorescent marker added to the particle.

13. The particle analyzing device according to claim 12, wherein color information to be averaged is that of pixels excluding at least a pixel located in a central portion among a plurality of pixels representing the one particle.

14. The particle analyzing device according to any one of claims 1 to 13, wherein a plurality of types of fluorescent markers are added to at least one type of particles included in the sample.

15. A particle analysis method comprising:
irradiating a sample emitting fluorescence of a plurality of colors with excitation light;
transmitting fluorescence of the plurality of colors while cutting off the excitation light by using one or a plurality of filters;
imaging fluorescence that has passed through the filter by an imaging unit having color identification ability; and
obtaining a diffusion rate due to Brownian motion of a particle included in the sample from image data of fluorescence obtained by the imaging unit, and analyzing physical property of the particle.

16. A particle analysis program which is a program used in a particle analyzing device including a light irradiation unit that irradiates a sample emitting fluorescence of a plurality of colors with excitation light, one or a plurality of filters that transmits the fluorescence of the plurality of colors while cutting off the excitation light, and an imaging unit having color identification ability for imaging fluorescence that has passed through the filter,
the particle analysis program causing a computer to perform a function as an analysis unit that obtains a diffusion rate due to Brownian motion of a particle included in the sample from image data of fluorescence obtained by the imaging unit and analyzes physical property of the particle.
